# DEMANDE DE BREVET EUROPEEN

(11) **EP 2 236 875 A1**
(43) Date de publication de la demande: **06.10.2010**
(21) Numéro de dépôt: 10305325.2
(22) Date de dépôt: 30.03.2010
(51) Int. Cl.: F16K 7/12, F16K 41/10

(54) **Dispositif de controle de la circulation d'un fluide**

(30) Priorité: 03.04.2009 FR 0952217
(71) Demandeur: MARK IV SYSTEMES MOTEURS (SAS), 92300 Levallois Perret (FR)
(72) Inventeur: Becker, Nicolas, 68000 Colmar (FR); Floranc, Alexandre, 68127 Sainte Croix en Plaine (FR); Cottet, François, 68240 Freland (FR); Guyon, David, 68040 Ingersheim (FR)
(74) Mandataire: Nuss, Laurent

(57) **Abrégé**

La présente invention a pour objet un dispositif de contrôle de la circulation d'un fluide au niveau d'une ouverture comprenant essentiellement, d'une part, un boîtier traversé par le fluide et présentant l'ouverture à contrôler, ainsi qu'au moins une seconde ouverture débouchant dans la chambre dudit boîtier, et, d'autre part, un organe d'obturation pouvant passer ou être déplacé, de manière réversible, d'une position de fermeture dans laquelle il obture l'ouverture à contrôler à au moins une position d'ouverture dans laquelle il libère ladite ouverture et autorise une circulation de fluide, l'organe d'obturation étant apte à se déployer dans la chambre et son déplacement étant commandé par au moins un moyen d'actionnement.

Dispositif (1) **caractérisé en ce que** l'organe d'obturation (6) comprend un corps mobile (8) formant piston et dont une partie d'extrémité (8') est configuré pour pouvoir obturer l'ouverture de passage (2) à contrôler et en ce qu'une portion (9') de membrane (9), est prise en sandwich entre la partie d'extrémité (8') du corps mobile (8) et au moins le bord (2') formant siège de l'ouverture de passage (2) à contrôler.

## Description

La présente invention concerne le domaine de la régulation fluidique, et a pour objet un dispositif de contrôle de la circulation d'un fluide, en particulier liquide, au niveau d'une ouverture ou de l'entrée d'un passage, ou encore d'une ouverture d'entrée ou de sortie, par exemple d'un segment de conduit.

L'invention vise en particulier les applications liées à la circulation de liquide dans les circuits de refroidissement de moteurs à combustion interne ou analogues.

On connaît déjà de nombreuses réalisations de dispositifs de régulation ou de contrôle de circulation de fluide, notamment liquide, dans lesquelles un organe mobile est déplaçable entre une position d'ouverture et de fermeture d'un orifice de passage à contrôler.

Il a en particulier été proposé des dispositifs comprenant essentiellement, d'une part, un corps creux présentant l'ouverture de passage à contrôler, ainsi qu'au moins une seconde ouverture de passage d'entrée ou de sortie pour le fluide, et, d'autre part, un organe d'obturation pouvant passer ou être déplacé, de manière réversible, d'un état ou d'une position de fermeture dans lequel ou laquelle il obture l'ouverture à contrôler à au moins une position ou un état d'ouverture dans lequel ou laquelle il libère l'ouverture à contrôler et autorise une circulation de fluide entre l'ouverture à contrôler et ladite au moins une seconde ouverture à travers au moins une partie ou région d'une chambre définie par ledit corps creux, l'organe d'obturation étant apte à se déployer, éventuellement à des degrés divers, dans la chambre et son déplacement ou changement d'état étant commandé par au moins un moyen d'actionnement.

Le fluide dont la circulation doit être régulée peut ou non traverser la chambre du corps creux, ou au moins une région déterminée de celle-ci.

Tel est notamment le cas des vannes à clapets ou à piston, par exemple les vannes à deux états ("ON" et "OFF") pour circuit de liquide de refroidissement.

Toutefois, ces dispositifs connus mettent en oeuvre des étanchéités dynamiques multiples, sont de structure complexe et d'un prix de revient élevé et présentent une tenue dans le temps limitée.

En outre, pour ces dispositifs connus, le nombre de pièces constitutives est élevé, l'assemblage généralement fastidieux, car nécessitant une grande précision, et la réalisation de pièces en plusieurs matériaux nécessaires.

De plus, le dégagement en position ouverte de l'organe de fermeture n'autorise qu'un débit limité du fait d'une perte de charge trop importante.

La présente invention a pour but de pallier au moins certains des inconvénients précités.

A cet effet, elle a pour objet un dispositif de contrôle de la circulation d'un fluide au niveau d'une ouverture de passage, d'entrée ou de sortie, par exemple d'un segment de conduit,
ledit dispositif comprenant essentiellement, d'une part, un corps creux présentant l'ouverture à contrôler, ainsi qu'au moins une seconde ouverture de passage, d'entrée ou de sortie pour le fluide, et, d'autre part, un organe d'obturation pouvant passer ou être déplacé, de manière réversible, d'un état ou d'une position de fermeture dans lequel ou laquelle il obture l'ouverture à contrôler à au moins une position ou un état d'ouverture dans lequel ou laquelle il libère l'ouverture à contrôler et autorise une circulation de fluide entre l'ouverture à contrôler et ladite au moins une seconde ouverture à travers au moins une partie ou région d'une chambre définie par ledit corps creux,
l'organe d'obturation étant apte à se déployer, éventuellement à des degrés divers, dans la chambre et son déplacement ou changement d'état étant commandé par au moins un moyen d'actionnement,
l'organe d'obturation comprenant un corps mobile formant piston ou clapet et dont une partie d'extrémité est configurée pour pouvoir obturer, en position de fermeture, l'ouverture de passage à contrôler et une portion de membrane en un matériau élastique étant prise en sandwich entre la partie d'extrémité du corps mobile et au moins le bord formant siège de l'ouverture de passage à contrôler, en position d'obturation étanche de ladite ouverture par ledit corps mobile,
dispositif **caractérisé en ce que** la membrane participe à la délimitation étanche de la chambre en formant une zone ou composante de paroi au moins partiellement déformable du corps creux et en ce que, en position d'ouverture de l'organe d'obturation composite, le corps mobile (8), notamment sa partie d'extrémité, et la membrane, notamment sa portion, sont situés sensiblement en-dehors de la région de la chambre traversée par le flux majoritaire du fluide circulant entre l'ouverture à contrôler et ladite au moins une seconde ouverture.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une composition de deux demies vues axiales schématiques en coupe d'un dispositif de contrôle de la circulation d'un fluide selon un premier mode de réalisation de l'invention ;
les figures 2 et 3 sont des vues en coupe d'un dispositif de contrôle selon un second mode de réalisation de l'invention, à l'état ouvert (ou passant) et à l'état fermé (ou obturé) ;
la figure 4 est une vue explosée du dispositif des figures 2 et 3, et,
les figures 5 et 6 sont des vues partielles, en coupe et à une échelle différente d'un dispositif de contrôle selon un troisième mode de réalisation de l'invention (en position ouverte sur la figure 5 et en position fermée sur la figure 6).

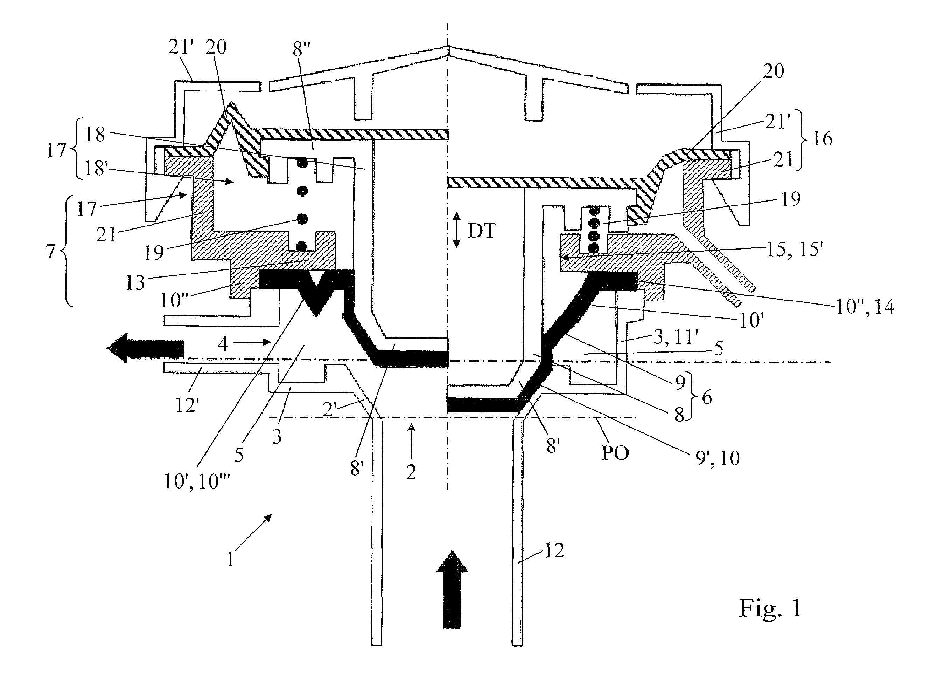

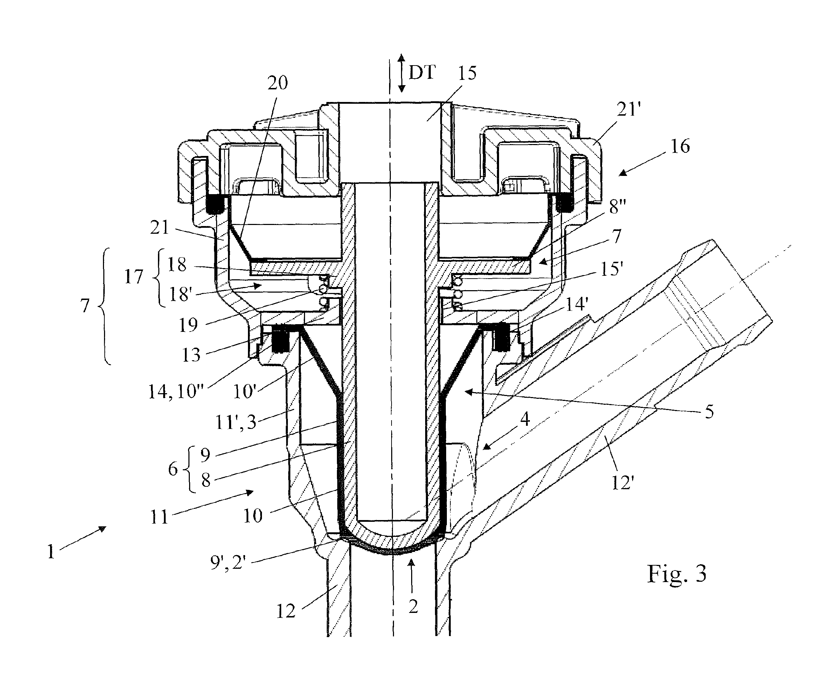

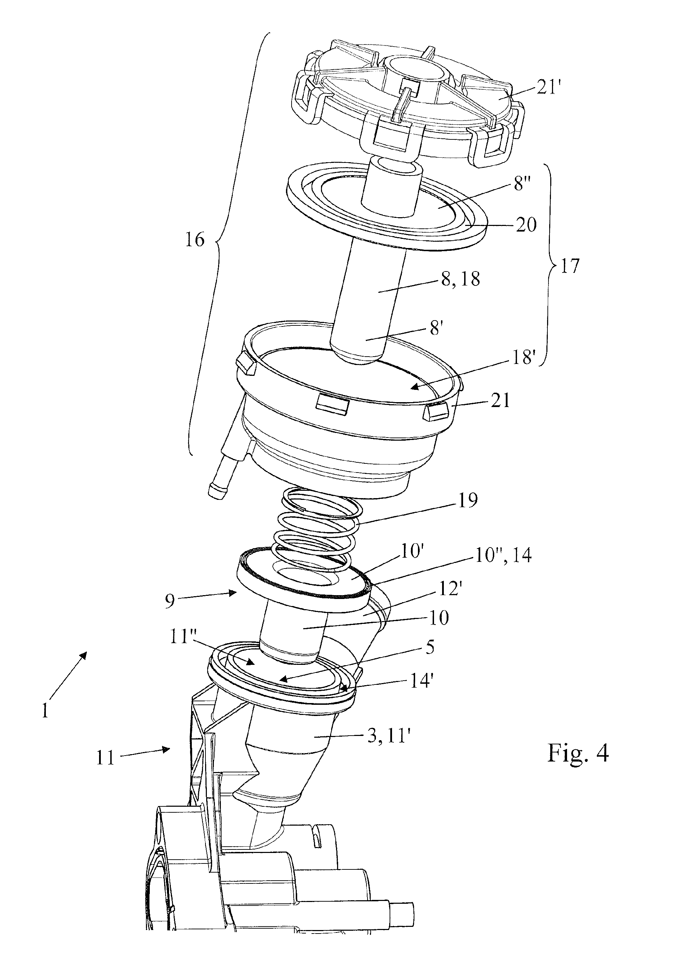

Les figures 1 à 6 des dessins annexés montrent un dispositif 1 de contrôle de la circulation d'un fluide au niveau d'une ouverture 2 de passage, d'entrée ou de sortie, par exemple d'un segment de conduit 12.

Ce dispositif 1 comprend essentiellement, d'une part, un corps creux 3 présentant l'ouverture 2 à contrôler, ainsi qu'au moins une seconde ouverture 4 de passage, et, d'autre part, un organe d'obturation 6 pouvant passer ou être déplacé, de manière réversible, d'un état ou d'une position de fermeture dans lequel ou laquelle il obture l'ouverture 2 à contrôler à au moins une position ou un état d'ouverture dans lequel ou laquelle il libère l'ouverture 2 à contrôler et autorise une circulation de fluide entre l'ouverture à contrôler et ladite au moins une seconde ouverture à travers au moins une partie ou région d'une chambre définie par ledit corps creux, l'organe d'obturation 6 étant apte à se déployer, éventuellement à des degrés divers, dans la chambre 5 et son déplacement ou changement d'état étant commandé par au moins un moyen d'actionnement 7.

L'organe d'obturation 6 comprend quant à lui un corps mobile 8 formant piston ou clapet et dont une partie d'extrémité 8' est configuré pour pouvoir obturer, en position de fermeture, l'ouverture de passage 2 à contrôler et une portion 9' de membrane 9 en un matériau élastique, participant à la délimitation étanche de la chambre 5, est prise en sandwich entre la partie d'extrémité 8' du corps mobile 8 et au moins le bord 2' formant siège de l'ouverture de passage 2 à contrôler, en position d'obturation étanche de ladite ouverture 2 par ledit corps mobile 8.

Conformément à l'invention, il est prévu que la membrane 9 participe à la délimitation étanche de la chambre 5 en formant une zone ou composante de paroi au moins partiellement déformable du corps creux 3 et, qu'en position d'ouverture de l'organe d'obturation 6 composite, le corps mobile 8, notamment sa partie d'extrémité 8', et la membrane 9, notamment sa portion 9', sont situés sensiblement en-dehors de la région 5' de la chambre 5 traversée par le flux majoritaire du fluide circulant entre l'ouverture à contrôler 2 et ladite au moins une seconde ouverture 4.

Ainsi, le corps mobile 8 de l'organe d'obturation 6 n'est pas en contact avec le fluide à réguler et réalise l'obturation étanche de l'ouverture de passage 2 en plaquant une portion d'une membrane déformable 9 sur ladite ouverture 2. Aucune étanchéité particulière, notamment par contact glissant, entre la chambre 5 et le corps mobile 8 n'est donc nécessaire, l'étanchéité résultant du pincement de la membrane entre le corps mobile 8 et le siège 2' de l'ouverture 2.

De plus, grâce aux dispositions de l'invention précitées, il est possible de séparer de manière simple le mécanisme d'actionnement et la chambre de passage du fluide puisque la membrane élastique 9 forme à la fois une partie de la paroi de la chambre et réalise l'étanchéité entre cette dernière et la chambre contenant le mécanisme d'actionnement du piston 8, ainsi qu'entre ce dernier et le bord de l'ouverture de passage 2 à contrôler.

De plus, en position d'ouverture, la perte de charge pour le flux traversant la chambre 5 est limitée puisque le piston 8 et la portion 9' de la membrane 9 se déplacent sensiblement en dehors de la région de la chambre traversée par le flux vers l'ouverture de passage 2.

Selon une première caractéristique constructive, et comme représenté sur les figures 1 à 6, le corps mobile 8 est un corps rigide coulissant dont la partie d'extrémité 8' au moins est alignée avec l'ouverture 2 à contrôler et dont la direction de translation DT est sécante, de manière sensiblement perpendiculaire, avec le plan PO de l'ouverture 2 à contrôler ou du siège 2' de cette dernière.

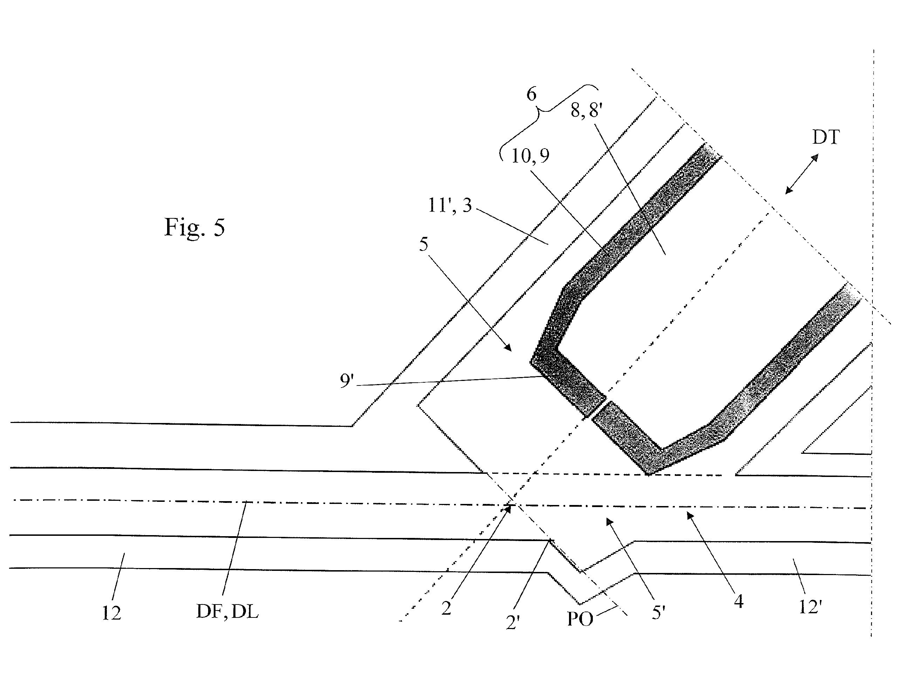

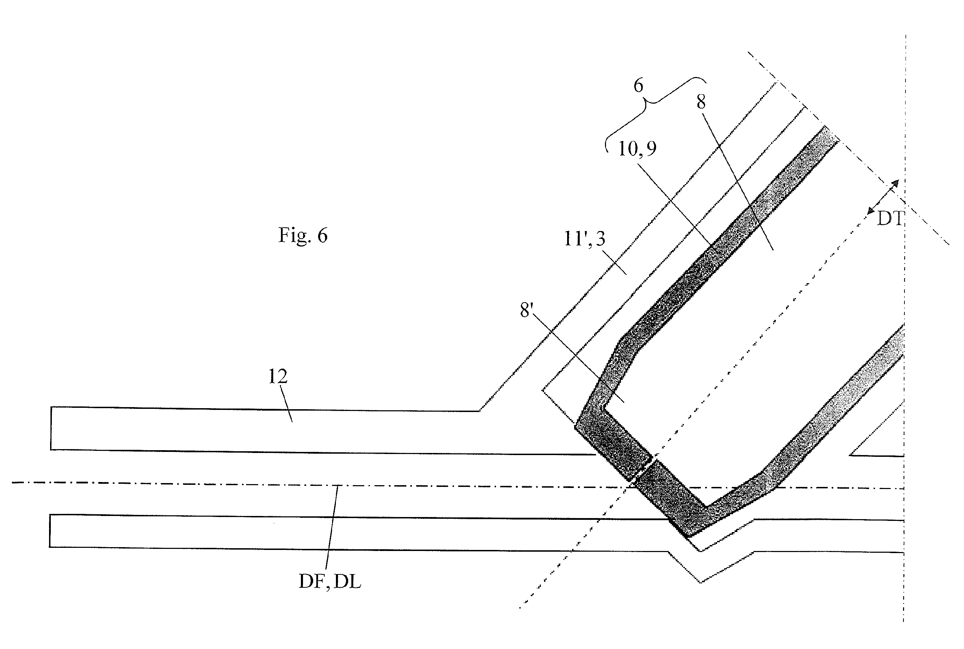

Selon une seconde caractéristique constructive, additionnelle ou alternative par rapport à la caractéristique précitée, ressortant des figures 5 et 6, le corps mobile 8 peut être un corps mobile 8 est un corps rigide coulissant dont la direction de translation DT est sécante oblique ou inclinée, avec la direction DF du flux à travers l'ouverture 2 à contrôler, le cas échéant confondue avec la direction longitudinale DL de la portion de conduit 12 définissant le passage de circulation consécutif à ladite ouverture 2.

Ainsi, dans les deux variantes, l'obturation est obtenue par une simple translation avec venue en butée.

Comme le montrent également les figures, le dispositif de contrôle 1 peut comprendre un corps creux 3 formant un boîtier délimitant une chambre 5 de circulation et de distribution effectives de fluide (fig. 1 à 4), ou un corps creux 3 rapporté comme accessoire de régulation entre deux segments de conduits 12 et 12', en n'étant alors que très partiellement traversée par le fluide (fig. 5 et 6).

Afin d'obtenir un calage précis de la membrane 9 par rapport au corps mobile 8, ainsi que le pincement d'une zone prédéterminée de la membrane 9 pour former le joint d'étanchéité par compression entre le corps 8 et le siège 2', la membrane 9 présente une partie 10 en saillie vers l'intérieur de la chambre 5 du boîtier 3 sous la forme d'une empreinte correspondant sensiblement, en négatif, au moins à la partie d'extrémité 8' du corps mobile 8.

De plus, en prévoyant une position d'ouverture avec le corps mobile 8 dans une position déjà déployée dans la chambre 5, on limite le déplacement dudit corps 8 entre les deux positions d'ouverture et de fermeture.

En accord avec une variante de réalisation avantageuse de l'invention, permettant de définir des zones de la membrane 9 d'un seul tenant avec des fonctionnalités spécifiques distinctes, celle-ci peut former une zone ou composante de paroi au moins partiellement déformable du corps creux 3 et être constituée par une partie centrale en saillie 10 recevant la partie d'extrémité 8' au moins du corps mobile 8 en la recouvrant intimement, par une partie intermédiaire 10' élastiquement déformable lors du coulissement du corps mobile 8 vers l'intérieur de la chambre 5 et à extension radiale, par exemple sensiblement annulaire, autour de la partie en saillie 10 et par une partie circonférentielle extérieure 10", prolongeant périphériquement la partie intermédiaire 10' et solidarisé par un assemblage étanche avec la partie principale 11 du corps creux ou boîtier 3.

Par ces dispositions, chacune des parties 10, 10', 10" peut être conçue pour répondre au mieux à sa fonction. En particulier, la partie intermédiaire 10' peut présenter une constitution particulièrement propice à la déformation par étirement.

Elle comportera éventuellement une réserve de matière à cet effet, par exemple sous la forme d'un pli 10"' du matériau de la partie 10' de la membrane 9 (figure 1).

Afin d'éviter une déformation permanente et non contrôlée (le cas échéant excessive) de la membrane 9 soumise à la pression du fluide en position ouverte du dispositif 1, le corps creux 3 comporte avantageusement une portion de paroi rigide 13 rapportée ou d'un seul tenant, fournissant une surface d'appui pour la membrane 9, en particulier pour la partie 10' de cette membrane 9 subissant une déformation importante lors de l'actionnement de l'organe d'obturation 6 et en complément de la partie d'extrémité 8' au moins du corps mobile 8 recouverte par ladite membrane 9.

Il en résulte que l'ensemble des parties 10 et 10' de la membrane 9 exposées à la pression du fluide est soutenue par des surfaces rigides (corps mobile 8 et portion de paroi 13), contre lesquelles lesdites parties de membrane sont plaquées sous l'effet de la pression du fluide en circulation.

L'homme du métier comprend bien entendu que les moyens d'actionnement 7 du corps mobile 8 de l'organe d'obturation 6 peuvent être de différentes natures à savoir électrique, hydraulique ou pneumatique par exemple, et être soit montés à proximité ou sur le boîtier 3, soit installés à distance, en réalisant alors la commande de l'organe d'obturation 6 par l'intermédiaire d'une pièce, d'un organe ou d'un mécanisme de transmission.

Selon une variante de réalisation préférée toutefois, représentée sur les figures 1 à 4 des dessins annexés, les moyens d'actionnement 7 du corps mobile 8 sont montés dans une structure 16 rapportée sur le corps creux 5, au niveau de la membrane 9 formant composante de paroi déformable dudit corps creux 3 délimitant la chambre 5, ladite structure 16, par exemple sous la forme d'un second corps creux, comportant une portion de paroi rigide 13 fournissant une surface d'appui pour une partie 10' au moins de la membrane 9 et intégrant éventuellement également au moins un moyen 15, 15' de guidage en translation du corps mobile 8, préférentiellement au moins deux paliers 15 et 15' alignés.

Conformément à un mode de réalisation avantageux de l'invention, le corps mobile 8 constitue le piston d'un vérin pneumatique 17 faisant partie des moyens d'actionnement 7 et dont le corps 18 renfermant la chambre de commande 18' est rapporté, par exemple par soudure, clippage ou collage, sur le boîtier ou corps creux 3, ce avec pincement d'une partie circonférentielle extérieure 10" ou du bord périphérique au moins de la membrane 9 formant paroi déformable, cette dernière assurant ainsi l'étanchéité de la chambre de commande 18' par rapport à la chambre de circulation 5 et par rapport au milieu extérieur.

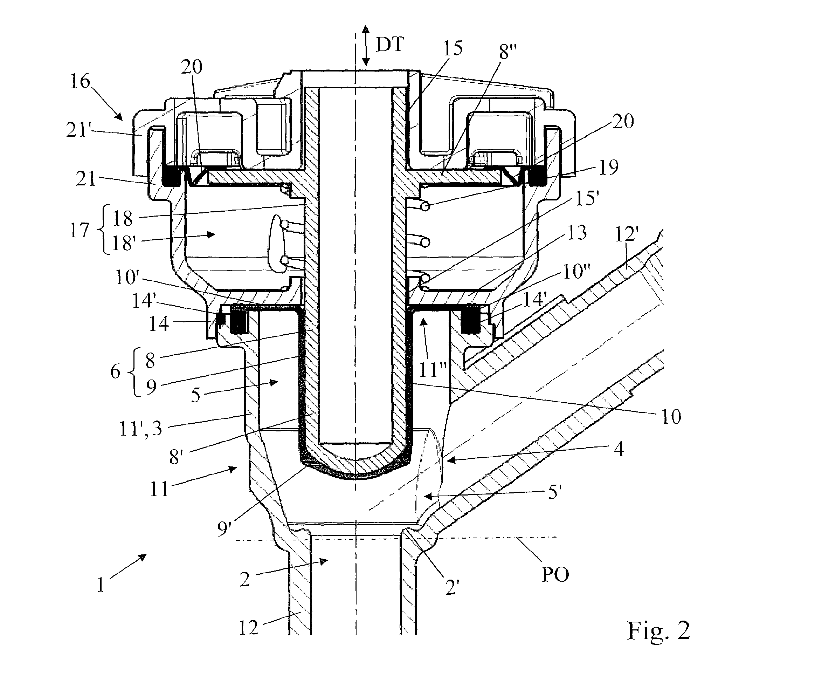

En relation avec un mode de réalisation pratique non limitatif du dispositif 1 de l'invention, par exemple sous la forme d'un boîtier de sortie d'eau, le boîtier 3 délimitant la chambre 5 de circulation ou de distribution du fluide à réguler est un corps composite creux formé, d'une part, d'une partie principale 11 comprenant une enveloppe 11' rigide délimitant pour l'essentiel la chambre 5 de circulation et intégrant l'ouverture 2 à contrôler et au moins une autre ouverture 4 débouchant dans la chambre 5, ainsi que des portions de conduits ou embouts 12, 12' prolongeant lesdites ouvertures 2, 4 vers l'extérieur et éventuellement des formations 13 fournissant des sites de raccordement et/ou de montage, ladite enveloppe rigide 11' étant ajourée au niveau de son côté opposé à l'ouverture 2 à contrôler, et, d'autre, part, d'une partie secondaire 9 constituée par la membrane déformable et rapportée de manière étanche sur l'enveloppe rigide 11' avec obturation du jour 11" de ladite enveloppe 11', par exemple par pincement d'un bourrelet périphérique 14 de ladite membrane 9 dans une rainure 14' s'étendant le long du bord du jour 11" de l'enveloppe 11' obturée par ladite membrane 9 (Fig. 2 à 4).

Lorsque le corps mobile 8 est un corps coulissant, il peut être avantageusement prévu que le dispositif 1 comprenne au moins un moyen 15, 15' de guidage en translation du corps mobile 8, intégrés dans une structure 16 rapportée sur le boîtier 3 et comprenant préférentiellement au moins deux paliers 15 et 15' alignés.

Comme le montrent également les figures 1 à 4, le corps mobile 8 est solidaire d'une seconde membrane 20 formant organe moteur et séparant la chambre de commande 18' en deux compartiments étanches pouvant être mis sous pression, dépressurisés ou mis à l'atmosphère, en fonction du déplacement souhaité. Cette membrane 20 peut par exemple consister en une membrane de forme annulaire reliant une extension discoïdale 8" du corps mobile 8 à la paroi périphérique du corps 18 du vérin pneumatique ou poumon 17.

La structure 16 (intégrant notamment les moyens de guidage en translation 15, 15') et le vérin pneumatique 17 peuvent éventuellement être confondus et se présenter sous la forme d'un ensemble structurel unique rapporté sur le boîtier 3.

Cet ensemble structurel peut par exemple être constitué de deux parties complémentaires, à savoir une cuve inférieure 21, fixée sur le boîtier 3 et intégrant la portion de paroi 13 et un premier palier de guidage 15', et un couvercle supérieur 21' fermant la cuve 21 de manière étanche, intégrant un second palier de guidage 15 et pinçant de manière étanche le bord périphérique de la seconde membrane 20 contre le bord de cuve 21. Chacune des deux parties est bien entendu pourvue d'ouvertures d'alimentation et d'évacuation d'air débouchant dans les compartiments de la chambre de commande 18'.

En vue d'intégrer une fonction de sécurité à l'ouverture ou à la fermeture, les moyens d'actionnement peuvent comprendre un moyen 19 de sollicitation élastique du corps mobile 8 en position d'obturation ou de libération de l'ouverture 2 à contrôler (sécurité à l'ouverture sur les figures annexées - ressort de compression 19).

La présente invention concerne également un circuit de circulation de fluide de refroidissement de moteur à combustion interne, **caractérisé en ce qu**'il comporte un boîtier de sortie d'eau correspondant au dispositif 1 tel que décrit ci-dessus.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de contrôle de la circulation d'un fluide au niveau d'une ouverture de passage, d'entrée ou de sortie, par exemple d'un segment de conduit,
ledit dispositif (1) comprenant essentiellement, d'une part, un corps creux (3) présentant l'ouverture (2) à contrôler, ainsi qu'au moins une seconde ouverture (4) de passage, d'entrée ou de sortie pour le fluide, et, d'autre part, un organe d'obturation (6) pouvant passer ou être déplacé, de manière réversible, d'un état ou d'une position de fermeture dans lequel ou laquelle il obture l'ouverture à contrôler (2) à au moins une position ou un état d'ouverture dans lequel ou laquelle il libère l'ouverture à contrôler (2) et autorise une circulation de fluide entre l'ouverture à contrôler (2) et ladite au moins une seconde ouverture (4) à travers au moins une partie ou région (5') d'une chambre (5) définie par ledit corps creux (3),
l'organe d'obturation (6) étant apte à se déployer, éventuellement à des degrés divers, dans la chambre (5) et son déplacement ou changement d'état étant commandé par au moins un moyen d'actionnement (7),
l'organe d'obturation (6) comprenant un corps mobile (8) formant piston ou clapet et dont une partie d'extrémité (8') est configurée pour pouvoir obturer, en position de fermeture, l'ouverture de passage (2) à contrôler et une portion (9') de membrane (9) en un matériau élastique étant prise en sandwich entre la partie d'extrémité (8') du corps mobile (8) et au moins le bord (2') formant siège de l'ouverture de passage (2) à contrôler, en position d'obturation étanche de ladite ouverture (2) par ledit corps mobile (8),
dispositif (1) **caractérisé en ce que** la membrane (9) participe à la délimitation étanche de la chambre (5) en formant une zone ou composante de paroi au moins partiellement déformable du corps creux (3) et **en ce que**, en position d'ouverture de l'organe d'obturation (6) composite, le corps mobile (8), notamment sa partie d'extrémité (8'), et la membrane (9), notamment sa portion (9'), sont situés sensiblement en-dehors de la région (5') de la chambre (5) traversée par le flux majoritaire du fluide circulant entre l'ouverture à contrôler (2) et ladite au moins une seconde ouverture (4).

2. Dispositif selon la revendication 1, **caractérisé en ce que** le corps mobile (8) est un corps rigide coulissant dont la partie d'extrémité (8') au moins est alignée avec l'ouverture (2) à contrôler et dont la direction de translation (DT) est sécante, de manière sensiblement perpendiculaire, avec le plan (PO) de l'ouverture (2) à contrôler ou du siège (2') de cette dernière.

3. Dispositif selon la revendication 1 ou 2, **caractérisé en ce que** le corps mobile (8) est un corps rigide coulissant dont la direction de translation (DT) est sécante, de manière oblique ou inclinée, avec la direction (DF) du flux à travers l'ouverture (2) à contrôler, le cas échéant confondue avec la direction longitudinale (DL) de la portion de conduit (12) définissant le passage de circulation consécutif à ladite ouverture (2).

4. Dispositif selon l'une quelconque des revendications 1 à 3, **caractérisé en ce que** la membrane (9) est d'un seul tenant et est constituée par une partie centrale en saillie (10) recevant la partie d'extrémité (8') au moins du corps mobile (8) en la recouvrant intimement, par une partie intermédiaire (10') élastiquement déformable lors du coulissement du corps mobile (8) vers l'intérieur de la chambre (5) et à extension radiale, par exemple sensiblement annulaire, autour de la partie en saillie (10) et par une partie circonférentielle extérieure (10"), prolongeant périphériquement la partie intermédiaire (10') et solidarisé par un assemblage étanche avec la partie principale (11) du corps creux ou boîtier (3).

5. Dispositif selon la revendication 4, **caractérisé en ce que** la membrane (9) présente une partie (10) en saillie vers l'intérieur de la chambre (5) du boîtier (3) sous la forme d'une empreinte correspondant sensiblement, en négatif, au moins à la partie d'extrémité (8') du corps mobile (8).

6. Dispositif selon l'une quelconque des revendications 1 à 5, **caractérisé en ce que** le corps creux (3) comporte une portion de paroi rigide (13) rapportée ou d'un seul tenant, fournissant une surface d'appui pour la membrane (9), en particulier pour la partie (10') de cette membrane (9) subissant une déformation importante lors de l'actionnement de l'organe d'obturation (6) et en complément de la partie d'extrémité (8') au moins du corps mobile (8) recouverte par ladite membrane (9).

7. Dispositif selon l'une quelconque des revendications 1 à 6, **caractérisé en ce que** les moyens d'actionnement (7) du corps mobile (8) sont montés dans une structure (16) rapportée sur le corps creux (5), au niveau de la membrane (9) formant composante de paroi déformable dudit corps creux (3) délimitant la chambre (5), ladite structure (16), par exemple sous la forme d'un second corps creux, comportant une portion de paroi rigide (13) fournissant une surface d'appui pour une partie (10') au moins de la membrane (9) et intégrant éventuellement également au moins un moyen (15, 15') de guidage en translation du corps mobile (8), préférentiellement au moins deux paliers (15 et 15') alignés.

8. Dispositif selon la revendication 7, **caractérisé en ce que** le corps mobile (8) constitue le piston d'un vérin pneumatique (17) faisant partie des moyens d'actionnement (7) et dont le corps (18) renfermant la chambre de commande (18') est rapporté, par exemple par soudure, clippage ou collage, sur le boîtier ou corps creux (3), ce avec pincement d'une partie circonférentielle extérieure (10") ou du bord périphérique au moins de la membrane (9) formant paroi déformable, cette dernière assurant ainsi l'étanchéité de la chambre de commande (18') par rapport à la chambre de circulation (5) et par rapport au milieu extérieur.

9. Dispositif selon l'une quelconque des revendications 7 et 8, **caractérisé en ce que** les moyens d'actionnement (7) comprennent également un moyen (19) de sollicitation élastique du corps mobile (8) en position d'obturation ou de libération de l'ouverture (2) à contrôler.

10. Dispositif selon l'une quelconque des revendications 1 à 9, **caractérisé en ce que** le corps creux ou boîtier (3) délimitant la chambre (5) de circulation ou de distribution du fluide à réguler est un corps composite creux formé, d'une part, d'une partie principale (11) comprenant une enveloppe (11') rigide délimitant pour l'essentiel la chambre (5) de circulation et intégrant l'ouverture (2) à contrôler et au moins une autre ouverture (4) débouchant dans la chambre (5), ainsi que des portions de conduits ou embouts (12, 12') prolongeant lesdites ouvertures (2, 4) vers l'extérieur, ladite enveloppe rigide (11') étant ajourée au niveau de son côté opposé à l'ouverture (2) à contrôler, et, d'autre, part, d'une partie secondaire (9) constituée par la membrane déformable et rapportée de manière étanche sur l'enveloppe rigide (11') avec obturation du jour (11") de ladite enveloppe (11'), par exemple par pincement d'un bourrelet périphérique (14) de ladite membrane (9) dans une rainure (14') s'étendant le long du bord du jour (11 ") de l'enveloppe (11') obturée par ladite membrane (9).

11. Dispositif selon l'une quelconque des revendications 1 à 10, **caractérisé en ce qu'**il consiste en un boîtier de sortie d'eau.

12. Circuit de circulation de fluide de refroidissement de moteur à combustion interne, **caractérisé en ce qu'**il comporte un boîtier de sortie d'eau correspondant au dispositif (1) selon l'une quelconque des revendications 1 à 11.
